(19) Europäisches Patentamt / European Patent Office / Office européen des brevets

(11) **EP 4 755 741 A1**

(12) **EUROPEAN PATENT APPLICATION**
published in accordance with Art. 153(4) EPC

(43) Date of publication:
**10.06.2026 Bulletin 2026/24**

(21) Application number: **24848328.1**

(22) Date of filing: **31.07.2024**

(51) International Patent Classification (IPC):
**B60W 30/06** (2006.01)     **B60W 30/095** (2012.01)
**G05D 1/00** (2024.01)

(86) International application number:
**PCT/CN2024/109001**

(87) International publication number:
**WO 2025/026373 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023 CN 202310976167**

(71) Applicants:
• **Zhejiang Geely Holding Group Co., Ltd.**
  **Hangzhou, Zhejiang 310051 (CN)**
• **Ningbo Geely Automobile Research & Development Co. Ltd.**
  **Hangzhou Bay New District**
  **Ningbo 315336 (CN)**

(72) Inventors:
• **WANG, Shunyao**
  **Hangzhou Bay New District, Ningbo, Zhejiang 315336 (CN)**
• **HU, Weilong**
  **Hangzhou Bay New District, Ningbo, Zhejiang 315336 (CN)**
• **QI, Hao**
  **Hangzhou Bay New District, Ningbo, Zhejiang 315336 (CN)**
• **WANG, Peng**
  **Hangzhou Bay New District, Ningbo, Zhejiang 315336 (CN)**

(74) Representative: **Boult Wade Tennant LLP**
  **Salisbury Square House**
  **8 Salisbury Square**
  **London EC4Y 8AP (GB)**

(54) **METHOD AND APPARATUS FOR GENERATING PARKING TRAJECTORY, DEVICE, AND STORAGE MEDIUM**

(57)     A method for generating a parking trajectory, an apparatus (170), a device (180), and a storage medium. The method includes: S101, collecting lane information ahead of a vehicle to be parked, and a position and a motion state of an obstacle around the vehicle to be parked; S102, determining positional relationships between the obstacle and the vehicle and between the obstacle and a lane where the vehicle is located; S103, determining an obstacle strategy according to the positional relationships, the lane information and the motion state of the obstacle; generating a lateral driving behavior control strategy according to a motion state of the vehicle, the obstacle strategy and the lane information, and generating a longitudinal driving behavior control strategy according to the lane information, the position of the obstacle and the motion state of the obstacle; S104, generating a parking trajectory of the vehicle to be parked according to the lateral driving behavior control strategy and the longitudinal driving behavior control strategy. The method improves the accuracy of the method for generating the parking trajectory.

FIG. 1

EP 4 755 741 A1

**Description**

The present application claims the priority of Chinese Patent Application No. 2023109761670, filed with the China National Intellectual Property Administration on August 3, 2023, and entitled with "METHOD FOR GENERATING PARKING TRAJECTORY, APPARATUS, DEVICE, AND STORAGE MEDIUM", which is hereby incorporated by reference in its entirety.

**TECHNICAL FIELD**

The present application relates to but is not limited to the field of intelligent driving technologies and, in particular, to a method for generating a parking trajectory, an apparatus, a device, and a storage medium.

**TECHNICAL BACKGROUND**

With the development of intelligent driving technologies, the autonomous parking scenario has become an important scenario of a real-world application of autonomous driving. The autonomous parking requires an intelligent driving system to complete environmental perception in underground and above-ground garages, and formulate a reasonable and safe trajectory plan under the condition of self-positioning.

By acquiring vehicle information associated with the present vehicle and lane information of the road where the present vehicle is driving, and then determining a future motion behavior of the present vehicle according to the vehicle information and the lane information, path planning is finally carried out according to the vehicle information and the future motion behavior of the present vehicle.

However, the generation of a parking trajectory directly and solely based on the vehicle information and the lane information will lead to problems such as inaccurate generation of the parking trajectory, low safety and poor user experience.

**SUMMARY**

The following is a summary of the subject matters described in detail herein. This summary is not intended to limit the scope of protection of the claims.

The present application provides a method for generating a parking trajectory, an apparatus, a device, and a storage medium.

In a first aspect, the present application provides a method for generating a parking trajectory, including:

collecting lane information ahead of a vehicle to be parked, and a position and a motion state of an obstacle around the vehicle to be parked;

determining positional relationships between the obstacle and the vehicle and between the obstacle and a lane where the vehicle is located;

determining an obstacle strategy according to the positional relationships, the lane information and the motion state of the obstacle;

generating a lateral driving behavior control strategy according to a motion state of the vehicle, the obstacle strategy and the lane information, and generating a longitudinal driving behavior control strategy according to the lane information, the position of the obstacle and the motion state of the obstacle;

generating a parking trajectory of the vehicle to be parked according to the lateral driving behavior control strategy and the longitudinal driving behavior control strategy.

In a second aspect, the present application provides an apparatus for generating a parking trajectory, including:

a collecting module, configured to collect lane information ahead of a vehicle to be parked, and a position and a motion state of an obstacle around the vehicle to be parked;

a determining module, configured to determine positional relationships between the obstacle and the vehicle and between the obstacle and a lane where the vehicle is located;

the determining module, further configured to determine an obstacle strategy according to the positional relationships, the lane information and the motion state of the obstacle;

a generating module, configured to generate a lateral driving behavior control strategy according to a motion state of the vehicle, the obstacle strategy and the lane information, and generate a longitudinal driving behavior control strategy according to the lane information, the position of the obstacle and the motion state of the obstacle;

the generating module, further configured to generate a parking trajectory of the vehicle to be parked according to the lateral driving behavior control strategy and the longitudinal driving behavior control strategy. In a third aspect, the present application provides a device for generating a parking trajectory, including:

> a processor, a memory and a communication interface;
> the memory is configured to store executable instructions of the processor;
> where the processor is configured to perform the method for generating the parking trajectory as described in the first aspect by executing the executable instructions.

In a fourth aspect, the present application provides a readable storage medium, which includes a computer program stored thereon, and the computer program, when executed by a processor, implements the method for generating the parking trajectory as described in the first aspect.

Using the method for generating the parking trajectory, the apparatus, the device, and the storage medium provided by the present application, the lane information ahead of the vehicle to be parked, and the position and the motion state of the obstacle around the vehicle to be parked are collected; the positional relationships between the obstacle and the vehicle and between the obstacle and the lane where the vehicle is located are determined; the obstacle strategy is determined according to the positional relationships, the lane information and the motion state of the obstacle; the lateral driving behavior control strategy is generated according to the motion state of the vehicle, the obstacle strategy and the lane information, and the longitudinal driving behavior control strategy is generated according to the lane information, the position of the obstacle and the motion state of the obstacle; the parking trajectory of the vehicle to be parked is generated according to the lateral driving behavior control strategy and the longitudinal driving behavior control strategy. Herein, the perception of the environment where the vehicle to be parked is located can be completed by collecting the lane information ahead of the vehicle to be parked and the obstacle information around the vehicle to be parked. Further, according to the collected obstacle information and lane information of the vehicle to be parked, the obstacle strategy, the lateral driving behavior control strategy and the longitudinal driving behavior control strategy corresponding to the vehicle to be parked are generated, so that the accuracy of generating the behavior control strategies is improved. Finally, the parking trajectory of the vehicle to be parked is planned according to the behavior control strategies, so that the accuracy of the method for generating the parking trajectory is improved.

Other aspects will become apparent after reading and understanding the accompanying drawings and detailed description.

## BRIEF DESCRIPTION OF DRAWINGS

Accompanying drawings herein, which are incorporated in and constitute a part of this description, illustrate embodiments consistent with the present application, and together with the description, serve to explain the principles of the present application.

> FIG. 1 is a schematic flowchart of a method for generating a parking trajectory provided by an embodiment of the present application;
> FIG. 2 is a schematic flowchart of generating an obstacle strategy, a lateral driving behavior control strategy and a longitudinal driving behavior control strategy provided by an embodiment of the present application;
> FIG. 3 is a correspondence diagram between an obstacle avoidance strategy and positional relationships (between an obstacle and a vehicle and between the obstacle and a lane where the vehicle is located), lane information, and a motion state of the obstacle;
> FIG. 4 is a correspondence diagram between a lateral behavior control strategy and a motion state of a vehicle, an obstacle strategy, and lane information;
> FIG. 5 is a correspondence diagram between a longitudinal driving behavior control strategy and lane information, a position and positional relationships of an obstacle, and a motion state of the obstacle;
> FIG. 6 is a schematic flowchart of generating a parking trajectory of a vehicle to be parked according to a lateral driving behavior control strategy and a longitudinal driving behavior control strategy;
> FIG. 7 is a sampling flowchart of multiple lateral parking trajectories;
> FIG. 8 is a sampling flowchart of multiple longitudinal parking speed curves;
> FIG. 9 is a schematic flowchart of performing lateral parking trajectory sampling for a vehicle to be parked according to a lateral driving behavior control strategy provided by an embodiment of the present application;
> FIG. 10 is an example diagram showing a drivable area when a lateral driving behavior control strategy is to control a vehicle to keep driving in the current lane;
> FIG. 11 is an example diagram showing a drivable area when a lateral driving behavior control strategy is to control a vehicle to perform avoidance driving;
> FIG. 12 is an example diagram showing a drivable area when a lateral driving behavior control strategy is to change a lane or control a vehicle to perform lane-borrowing driving;

FIG. 13 is a schematic flowchart of performing longitudinal parking speed sampling of a vehicle to be parked according to a longitudinal driving behavior control strategy provided by an embodiment of the present application;

FIG. 14 is an example diagram of a speed sampling interval when a longitudinal driving behavior control strategy is to control a vehicle to perform cruise driving;

FIG. 15 is an example diagram of a speed sampling interval when a longitudinal driving behavior control strategy is to control a vehicle to perform vehicle-following driving;

FIG. 16 is an example diagram of a speed sampling interval when a longitudinal driving behavior control strategy is to control a vehicle to stop;

FIG. 17 is a schematic structural diagram of an apparatus for generating a parking trajectory provided by an embodiment of the present application;

FIG. 18 is a schematic structural diagram of a device for generating a parking trajectory provided by an embodiment of the present application.

Through the accompanying drawings, embodiments of the present application have been shown clearly, and will be described in more details later. These accompanying drawings and written descriptions are not intended to limit the scope of the concept of the present application in any way, but to explain the concept of the present application to those skilled in the art by referring to specific embodiments.

**DESCRIPTION OF EMBODIMENTS**

Descriptions will now be given in detail for exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all implementations consistent with the present application. Rather, they are merely examples of apparatuses and methods consistent with some aspects of the present application as detailed in the appended claims.

By acquiring vehicle information associated with a present vehicle and lane information of a road where the present vehicle is driving, and then determining a future motion behavior of the present vehicle according to the vehicle information and the lane information, path planning is finally carried out according to the vehicle information and the future motion behavior of the present vehicle. However, the generation of a parking trajectory directly and solely based on the vehicle information and the lane information will lead to problems such as inaccurate generation of the parking trajectory, low safety and poor user experience.

The present application proposes: collecting lane information ahead of a vehicle to be parked, and a position and a motion state of an obstacle around the vehicle to be parked; determining positional relationships between the obstacle and the vehicle and between the obstacle and a lane where the vehicle is located; determining an obstacle strategy according to the positional relationships, the lane information and the motion state of the obstacle; generating a lateral driving behavior control strategy according to the motion state of the vehicle, the obstacle strategy and the lane information, and generating a longitudinal driving behavior control strategy according to the lane information, the position of the obstacle and the motion state of the obstacle; generating a parking trajectory of the vehicle to be parked according to the lateral driving behavior control strategy and the longitudinal driving behavior control strategy. Herein, the perception of the environment where the vehicle to be parked is located can be completed by collecting the lane information ahead of the vehicle to be parked and the obstacle information around the vehicle to be parked. Further, according to the collected obstacle information and lane information of the vehicle to be parked, the obstacle strategy, the lateral driving behavior control strategy and the longitudinal driving behavior control strategy corresponding to the vehicle to be parked are generated, so that the accuracy of generating the behavior control strategies is improved. Finally, the parking trajectory of the vehicle to be parked is planned according to the behavior control strategies, so that the accuracy of the method for generating the parking trajectory is improved.

Technical solutions of the present application and technical solutions of the present application will be described in detail with specific embodiments. The following specific embodiments can be combined with each other, and the same or similar concepts or processes may not be repeated in some embodiments. Embodiments of the present application will be described below with reference to the accompanying drawings.

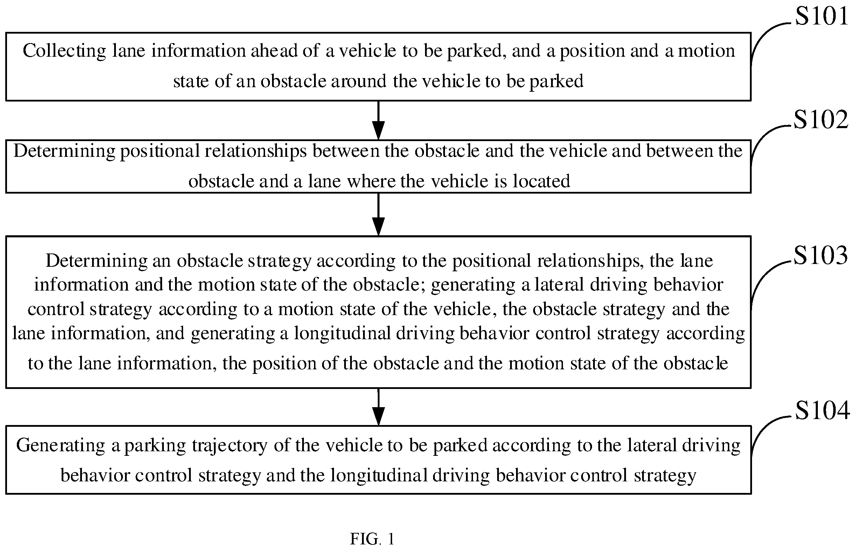

FIG. 1 is a schematic flowchart of a method for generating a parking trajectory provided by a first embodiment of the present application. The executive entity is a device for generating a parking trajectory, which may generally be implemented by software, hardware or a combination of software and hardware.

As shown in FIG. 1, the method for generating the parking trajectory of this embodiment may include the following steps.

Step S101: collecting lane information ahead of a vehicle to be parked, and a position and a motion state of an obstacle around the vehicle to be parked.

Specifically, the lane information ahead of the vehicle to be parked and obstacle information around the vehicle to be parked can be collected.

The lane information of the vehicle to be parked can be extracted from navigation information of the vehicle to be parked. The navigation information includes but is not limited to: the current lane ID, the lane width, the lane boundary type (dotted line/solid line), whether navigation of lane change is required, the distance from the navigated lane change point, information on left and right lanes, and other information.

The obstacle information around the vehicle to be parked can be collected through a visual perception module of the vehicle to be parked, where the obstacle information includes but is not limited to information such as the size, position and state of the obstacle.

Step S102: determining positional relationships between the obstacle and the vehicle and between the obstacle and a lane where the vehicle is located.

Specifically, the positional relationships between the obstacle and the vehicle and between the obstacle and the lane where the vehicle is located can be determined according to the current position of the vehicle to be parked, as well as the lane information ahead of the vehicle to be parked and the position and the motion state of the obstacle around the vehicle to be parked, which are collected in step S101. For example, the obstacle is located ahead of or behind the vehicle. For example, the obstacle is located in the lane where the vehicle is located.

Step S103: determining an obstacle strategy according to the positional relationships, the lane information and the motion state of the obstacle; generating a lateral driving behavior control strategy according to a motion state of the vehicle, the obstacle strategy and the lane information, and generating a longitudinal driving behavior control strategy according to the lane information, the position of the obstacle and the motion state of the obstacle.

Specifically, the obstacle strategy can be determined according to the positional relationships (which are determined in step S102) between the obstacle and the vehicle and between the obstacle and the lane where the vehicle is located, the lane information and the motion state of the obstacle.

The obstacle strategy refers to an obstacle avoidance strategy for the vehicle to be parked to perform driving control for the obstacle around the vehicle. The obstacle strategy includes but is not limited to: controlling the vehicle to ignore the obstacle and drive, controlling the vehicle to circumvent the obstacle and drive, controlling the vehicle to avoid the obstacle and drive, and other strategies.

Specifically, the lateral driving behavior control strategy can be generated according to the motion state of the vehicle, the obstacle strategy determined above and the lane information (which is described in step S101) ahead of the vehicle to be parked.

The lateral driving behavior control strategy refers to a strategy of planning a lateral behavior of the vehicle to be parked. The lateral driving behavior control strategy includes but is not limited to: controlling the vehicle to keep driving in the current lane, controlling the vehicle to perform lane-borrowing driving, controlling the vehicle to perform lane-changing driving, controlling the vehicle to perform avoidance driving, and other control strategies.

Specifically, the longitudinal driving behavior control strategy can be generated according to the lane information ahead of the vehicle to be parked and the position and the motion state of the obstacle around the vehicle to be parked, which are collected in step S101.

The longitudinal driving behavior control strategy refers to a strategy of planning a longitudinal behavior of the vehicle to be parked. The longitudinal driving behavior control strategy includes but is not limited to: controlling the vehicle to perform cruise driving, controlling the vehicle to perform vehicle-following driving, controlling the vehicle to stop, and other control strategies.

Step S104: generating a parking trajectory of the vehicle to be parked according to the lateral driving behavior control strategy and the longitudinal driving behavior control strategy.

Specifically, the parking trajectory of the vehicle to be parked can be planned according to the lateral driving behavior control strategy and the longitudinal driving behavior control strategy which are generated in step S103 to obtain the parking trajectory of the vehicle to be parked.

Optionally, parking control can be performed on the vehicle to be parked according to the parking trajectory, so that the vehicle to be parked can follow the parking trajectory and stop at an intended parking spot. Optionally, the parking trajectory can be outputted to a central control display apparatus of the vehicle to be parked, so that a user can conduct autonomous parking control with reference to the parking trajectory.

Optionally, after generating the parking trajectory of the vehicle to be parked according to the lateral driving behavior control strategy and the longitudinal driving behavior control strategy, the parking trajectory of the vehicle to be parked can be optimized according to the lane information and the obstacle information, to obtain a final parking trajectory of the vehicle to be parked. Herein, the process of optimizing the parking trajectory of the vehicle to be parked may include various processes. For example, the process of optimizing the parking trajectory of the vehicle to be parked can be divided into lateral optimization for the parking trajectory of the vehicle to be parked and longitudinal optimization for the parking trajectory of the vehicle to be parked, etc.

Using the method for generating the parking trajectory provided by the embodiment, the lane information ahead of the vehicle to be parked, and the position and the motion state of the obstacle around the vehicle to be parked are collected; the positional relationships between the obstacle and the vehicle and between the obstacle and the lane where the vehicle is located are determined; the obstacle strategy is determined according to the positional relationships, the lane information and the motion state of the obstacle; the lateral driving behavior control strategy is generated according to the motion state of the vehicle, the obstacle strategy and the lane information, and the longitudinal driving behavior control strategy is generated according to the lane information, the position of the obstacle and the motion state of the obstacle; the parking trajectory of the vehicle to be parked is generated according to the lateral driving behavior control strategy and the longitudinal driving behavior control strategy. Herein, the perception of the environment where the vehicle to be parked is located can be completed by collecting the lane information ahead of the vehicle to be parked and the obstacle information around the vehicle to be parked. Further, according to the collected obstacle information and lane information of the vehicle to be parked, the obstacle strategy, the lateral driving behavior control strategy and the longitudinal driving behavior control strategy corresponding to the vehicle to be parked are generated, so that the accuracy of generating the behavior control strategies is improved. Finally, the parking trajectory of the vehicle to be parked is planned according to the behavior control strategies, so that the accuracy of the method for generating the parking trajectory is improved.

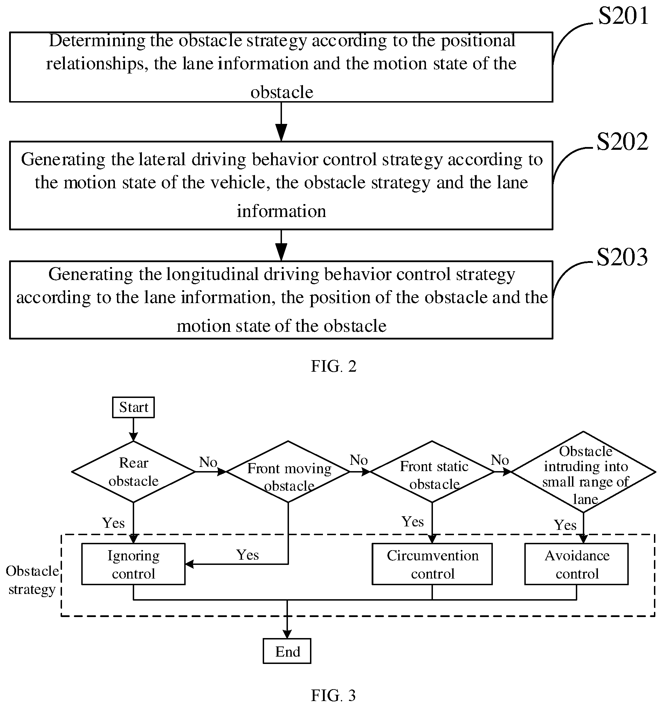

FIG. 2 is a schematic flowchart of generating an obstacle strategy, a lateral driving behavior control strategy and a longitudinal driving behavior control strategy provided by a second embodiment of the present application. Based on the embodiment shown in FIG. 1, this embodiment describes in detail the process of generating the obstacle strategy, the lateral driving behavior control strategy and the longitudinal driving behavior control strategy.

As shown in FIG. 2, the process of generating the obstacle strategy, the lateral driving behavior control strategy and the longitudinal driving behavior control strategy in this embodiment may include the following steps.

Step S201: determining the obstacle strategy according to the positional relationships, the lane information and the motion state of the obstacle.

Specifically, as described in step S103, the obstacle strategy can be determined according to the positional relationships (which are determined in step S102) between the obstacle and the vehicle and between the obstacle and the lane where the vehicle is located, the lane information, and the motion state of the obstacle. FIG. 3 is a correspondence diagram between an obstacle avoidance strategy and positional relationships (between an obstacle and a vehicle and between the obstacle and a lane where the vehicle is located), lane information, and a motion state of the obstacle. Ignoring control is to control the vehicle to ignore the obstacle and drive, circumvention control is to control the vehicle to circumvent the obstacle and driving, and avoidance control is to control the vehicle to avoid the obstacle and drive, etc.

Specifically, if the obstacle is located behind the vehicle, or if the obstacle is located ahead of the vehicle and the obstacle is in a moving state, the obstacle strategy is to control the vehicle to ignore the obstacle and drive. If the obstacle is ahead of the vehicle and the obstacle is in a static state, the obstacle strategy is to control the vehicle to circumvent the obstacle and drive. If a range occupied by the obstacle in the current lane where the vehicle is located is less than a set area, the obstacle strategy is to control the vehicle to avoid the obstacle and drive.

Step S202: generating the lateral driving behavior control strategy according to the motion state of the vehicle, the obstacle strategy and the lane information.

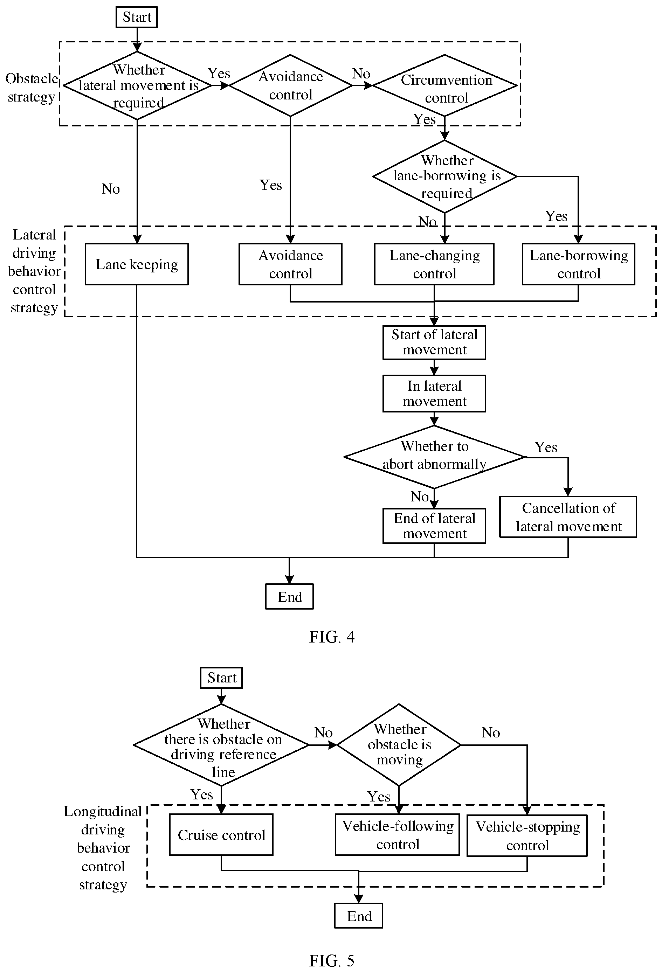

Specifically, as described in step S103, the lateral driving behavior control strategy can be generated according to the motion state of the vehicle, the obstacle strategy determined above and the lane information (which is described in step S101) ahead of the vehicle to be parked. FIG. 4 is a correspondence diagram between a lateral driving behavior control strategy and a motion state of a vehicle, an obstacle strategy, and lane information. Lane keeping is to control the vehicle to keep driving in the current lane, avoidance control is to control the vehicle to perform avoidance driving, lane-changing control is to control the vehicle to perform lane-changing driving, and lane-borrowing control is to control the vehicle to perform lane-borrowing driving.

Specifically, it can be determined first whether the motion state of the vehicle includes a lateral movement.

It may be determined that the motion state of the vehicle includes a lateral movement. If the obstacle strategy is to control the vehicle to circumvent the obstacle and drive, whether the vehicle needs to control the vehicle to perform lane-borrowing driving is decided according to the lane information, if needed, the vehicle is controlled to perform lane-borrowing driving; otherwise, the lateral driving behavior control strategy is to control the vehicle to perform lane-changing driving. If the obstacle strategy is to control the vehicle to avoid the obstacle and drive, the lateral driving behavior control strategy is to control the vehicle to perform avoidance driving.

It may be determined that the motion state of the vehicle does not include the lateral movement, and the lateral driving behavior control strategy is to control the vehicle to keep driving in the current lane.

Step S203: generating the longitudinal driving behavior control strategy according to the lane information, the position of the obstacle and the motion state of the obstacle.

Specifically, as described in step S103, the longitudinal driving behavior control strategy can be generated according to the lane information ahead of the vehicle to be parked, and the position and the motion state of the obstacle around the vehicle to be parked, which are collected in step S101. FIG. 5 is a correspondence diagram between a longitudinal driving behavior control strategy and lane information, a position and positional relationships of an obstacle, and a motion state of the obstacle. Cruise control is to control the vehicle to perform cruise driving, vehicle-following control is to control the vehicle to perform vehicle-following driving, and stopping control is to control the vehicle to stop.

Specifically, a driving reference line can be generated according to the lane information. The driving reference line refers to a reference line required and used for planning a parking trajectory of the vehicle to be parked. Specifically, the driving reference line is a curve formed based on a set of discrete points, and the curve may be derived from map lane data, a drivable area detected by a perception module in real time, and path points memorized by the user. Based on the above discrete curve, curve smoothing is further performed to construct a smooth curve required and used for planning a parking trajectory.

Specifically, the obstacle can be projected onto the driving reference line to determine the positional relationship between the obstacle and the driving reference line. If the obstacle is not located on the driving reference line, the longitudinal driving behavior control strategy is to control the vehicle to perform cruise driving. If the obstacle is located on the driving reference line, whether the obstacle is in the moving state is decided, if so, the longitudinal driving behavior control strategy is to control the vehicle to perform vehicle-following driving, otherwise, the longitudinal driving behavior control strategy is to control the vehicle to stop.

In the process of generating the obstacle strategy, the lateral driving behavior control strategy and the longitudinal driving behavior control strategy provided by this embodiment, the obstacle strategy is determined according to the positional relationships, the lane information and the motion state of the obstacle. Further, the lateral driving behavior control strategy is generated according to the obstacle strategy, the motion state of the vehicle and the lane information, thus improving the accuracy of the lateral driving behavior control strategy, and the longitudinal driving behavior control strategy is generated according to the lane information, the position of the obstacle and the motion state of the obstacle, thereby further improving the accuracy of the method for generating the parking trajectory.

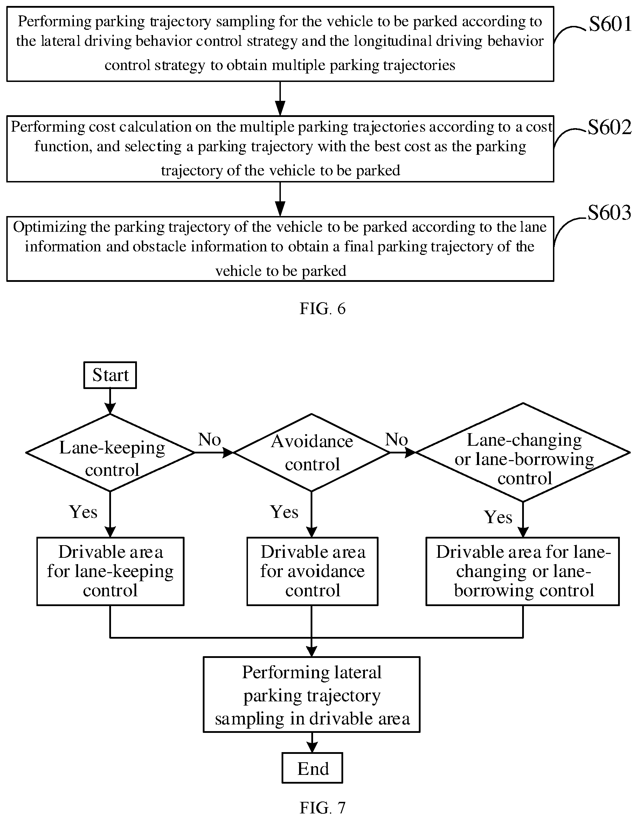

FIG. 6 is a schematic flowchart of generating a parking trajectory of a vehicle to be parked according to a lateral driving behavior control strategy and a longitudinal driving behavior control strategy provided by the second embodiment of the present application. Based on the embodiment shown in FIG. 1 or FIG. 2, this embodiment describes in detail the process of generating the parking trajectory of the vehicle to be parked according to the lateral driving behavior control strategy and the longitudinal driving behavior control strategy.

As shown in FIG. 6, the generating the parking trajectory of the vehicle to be parked according to the lateral driving behavior control strategy and the longitudinal driving behavior control strategy in this embodiment may include the following steps.

Step S601: performing parking trajectory sampling for the vehicle to be parked according to the lateral driving behavior control strategy and the longitudinal driving behavior control strategy to obtain multiple parking trajectories.

Specifically, according to the lateral driving behavior control strategy and the longitudinal driving behavior control strategy which are determined in step S103, the parking trajectory sampling can be performed for the vehicle to be parked to obtain multiple parking trajectories.

Optionally, the trajectory sampling can be performed for the vehicle to be parked through the lateral driving behavior control strategy and the longitudinal driving behavior control strategy respectively, and the sampling results can be further combined to obtain multiple parking trajectories.

Specifically, firstly, lateral parking trajectory sampling can be performed for the vehicle to be parked according to the lateral driving behavior control strategy, to obtain multiple lateral parking trajectories.

Specifically, the type of the lateral driving behavior control strategy can be determined first. As shown in FIG. 7, FIG. 7 is a sampling flowchart of multiple lateral parking trajectories. Further, according to the type of the lateral driving behavior control strategy, a drivable area of the vehicle to be parked is defined and a sampling rule of a lateral parking trajectory is set. Further, lateral parking trajectory sampling is performed within the drivable area of the vehicle to be parked according to the sampling rule of the lateral parking trajectory.

Secondly, longitudinal parking speed sampling can be performed for the vehicle to be parked according to the longitudinal driving behavior control strategy, to obtain multiple longitudinal parking speed curves.

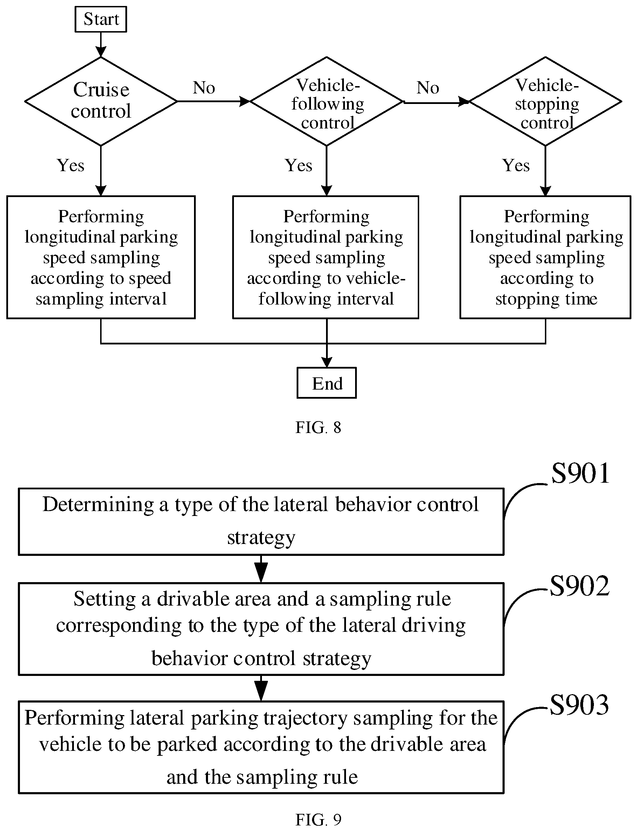

Specifically, the type of the longitudinal driving behavior control strategy can be determined first. As shown in FIG. 8, FIG. 8 is a sampling flowchart of multiple longitudinal parking speed curves. Further, longitudinal parking speed sampling is performed for the vehicle to be parked according to the type of the longitudinal driving behavior control strategy.

Finally, the multiple lateral parking trajectories can be combined with the multiple vertical parking speed curves to obtain multiple parking trajectories.

Optionally, as described in step S104, the multiple parking trajectories mentioned above can be outputted to the central control display apparatus of the vehicle to be parked for the user to select. Further, the device for generating the parking trajectory can be configured according to the parking trajectory selected by the user, or the user can control the vehicle to be parked autonomously with reference to the selected parking trajectory.

Step S602: performing cost calculation on the multiple parking trajectories according to a cost function, and selecting a parking trajectory with the best cost as the parking trajectory of the vehicle to be parked.

Optionally, after the parking trajectory sampling is performed for the vehicle to be parked according to the lateral driving behavior control strategy and the longitudinal driving behavior control strategy to obtain multiple parking trajectories in step S601, the cost calculation is performed on the multiple parking trajectories obtained in step S601 according to the cost function, and the parking trajectory with the best cost is selected as the parking trajectory of the vehicle to be parked.

Optionally, firstly, the cost function can be used to calculate a cost value of each motion parameter of each parking trajectory. Specifically, the motion parameter of the parking trajectory refers to a motion parameter of the vehicle to be parked in the process of driving along the parking trajectory. The motion parameter includes but is not limited to: a reference speed, an acceleration, a jerk, a centripetal acceleration, a trajectory length, a lateral error and other parameters. An example of the cost function and its description are shown in Table 1.

Table 1

| Cost function | Description |
|---|---|
| Reference speed cost | The trajectory has a low cost for the reference speed, and the reference speed is determined by the longitudinal behavior control decision |
| Acceleration cost | The acceleration of the trajectory is as small as possible |
| Jerk cost | The jerk of the trajectory is as small as possible |
| Centripetal acceleration cost | The centripetal acceleration of the trajectory is as small as possible |
| Trajectory length cost | The trajectory length is as long as possible |
| Lateral error cost | The trajectory is as close as possible to the reference line |
| End point cost | As close as possible to the end point |
| Collision cost | As far as possible from the obstacle |

Secondly, weighted calculation can be performed on the cost value of each motion parameter of each parking trajectory to obtain a weighted cost value corresponding to each parking trajectory. Specifically, the weighted cost value corresponding to each parking trajectory can be calculated according to a weighted calculation method, which is not limited in the present application.

Finally, a parking trajectory corresponding to the minimum weighted cost value can be selected as the parking trajectory of the vehicle to be parked.

Optionally, as described in step S103, parking control can be performed on the vehicle to be parked according to the parking trajectory, so that the vehicle to be parked can follow the parking trajectory and stop at an intended parking spot. Optionally, the parking trajectory can be outputted to the central control display apparatus of the vehicle to be parked, so that the user can conduct autonomous parking control with reference to the parking trajectory.

Step S603: optimizing the parking trajectory of the vehicle to be parked according to the lane information and the obstacle information to obtain a final parking trajectory of the vehicle to be parked.

Optionally, after the cost calculation is performed on the multiple parking trajectories according to the cost function, and the parking trajectory with the best cost is selected as the trajectory of the vehicle to be parked in step S602, the parking trajectory of the vehicle to be parked obtained in step S602 can be optimized according to the lane information and the obstacle information which are collected in step S101, to obtain the final parking trajectory of the vehicle to be parked.

Optionally, firstly, the parking trajectory of the vehicle to be parked can be decomposed into a lateral parking trajectory of the vehicle to be parked and a longitudinal parking speed curve of the vehicle to be parked.

Secondly, the lateral parking trajectory of the vehicle to be parked, which is obtained by decomposing, can be optimized. Specifically, a lateral variable to be optimized can be first extracted from the lateral parking trajectory of the vehicle to be parked, and a lateral optimization objective function and a lateral optimization condition can be set according to the obstacle information and the lane information. The lateral variable to be optimized refers to a variable for optimizing the lateral parking trajectory of the vehicle to be parked. The lateral optimization variable includes but is not limited to: a lateral position sequence, a lateral speed sequence, a lateral acceleration sequence, and other variables, as shown in Table 2. The lateral optimization objective function refers to an objective function used to optimize the lateral variable to be optimized according to the lateral optimization condition. The lateral optimization objective function includes but is not limited to: a lateral position cost function, a lateral speed cost function, a lateral acceleration cost function, and other functions, as shown in Table 2. The lateral optimization condition refers to a condition for constraining the lateral variable to be optimized according to the lateral optimization objective function. The lateral optimization condition includes but is not limited to: a drivable area boundary acquired according to the obstacle information and the lane information, such as a drivable area boundary formed by a static obstacle and a road boundary, a trajectory start point extracted from the parking trajectory of the vehicle to be parked that is selected in step S602, a set lateral speed limit, a set lateral acceleration limit, a set lateral jerk limit, and other conditions, as shown in Table 2. Table 2 is the relevant settings for lateral path optimization of the parking trajectory.

Table 2

| Related Settings for Lateral Path Optimization of Parking Trajectory | | |
| --- | --- | --- |
| Lateral variable to be optimized | Lateral optimization objective function | Lateral optimization condition |
| Lateral position sequence<br>Lateral speed sequence<br><br>Lateral acceleration sequence | Deviation from the optimal sampling path<br>Lateral position cost<br>Lateral speed cost<br>Lateral acceleration cost<br>Lateral jerk cost | Static obstacle and road boundary<br>Lateral speed limit<br>Lateral acceleration limitation<br><br>Lateral jerk limit<br>Lateral speed continuity<br>Lateral acceleration continuity<br>Start point constraint |

Secondly, the lateral variable to be optimized can be optimized according to the lateral optimization objective function and the lateral optimization condition, to obtain the final lateral parking trajectory of the vehicle to be parked, which is the optimal.

Then, the longitudinal parking speed curve of the vehicle to be parked, which is obtained by decomposing, can be optimized. Specifically, a longitudinal variable to be optimized can be first selected from the longitudinal parking speed curve of the vehicle to be parked, and a longitudinal optimization objective function and a longitudinal optimization condition can be set according to the obstacle information. The longitudinal variable to be optimized refers to a variable for optimizing the longitudinal parking speed curve of the vehicle to be parked. The longitudinal variable to be optimized includes but is not limited to: a longitudinal position sequence, a longitudinal speed sequence, a longitudinal acceleration sequence, and other variables, as shown in Table 3. The longitudinal optimization objective function refers to an objective function used to optimize the longitudinal variable to be optimized according to the longitudinal optimization condition. The longitudinal optimization objective function includes but is not limited to: a longitudinal speed cost function, a longitudinal acceleration cost function, a longitudinal jerk cost function, and other functions, as shown in Table 3. The longitudinal optimization condition refers to a condition for constraining the longitudinal variable to be optimized according to the longitudinal optimization objective function. The longitudinal optimization condition includes but is not limited to: a drivable area boundary acquired according to the obstacle information and the lane information, such as an obstacle boundary formed by the obstacle ahead of the vehicle to be parked, a trajectory start point extracted from the parking trajectory of the vehicle to be parked that is selected in step S602, a set longitudinal speed limit, a set longitudinal acceleration limit, a set longitudinal jerk limit, and other conditions, as shown in Table 3. Table 2 is the relevant settings for longitudinal speed optimization of the parking trajectory.

Table 3

| Related Settings for Longitudinal Speed Optimization of Parking Trajectory | | |
| --- | --- | --- |
| Longitudinal variable to be optimized | Longitudinal optimization objective function | Longitudinal optimization condition |
| Longitudinal position sequence<br><br>Longitudinal speed sequence<br>Longitudinal acceleration sequence | Deviation from the optimal sampling trajectory<br>Longitudinal speed cost<br>Longitudinal acceleration cost<br>Longitudinal jerk cost<br>Relaxation variable cost | Obstacle boundary<br>Longitudinal speed limit<br>Longitudinal acceleration limit<br>Longitudinal jerk limit<br>Longitudinal speed continuity<br>Longitudinal acceleration continuity<br>Start point constraint |

Secondly, the longitudinal variable to be optimized can be optimized according to the longitudinal optimization objective function and the longitudinal optimization condition, to obtain the final longitudinal parking speed curve of the vehicle to be parked, which is the optimal.

Finally, the final lateral parking trajectory of the vehicle to be parked can be combined with the final longitudinal parking speed curve of the vehicle to be parked to obtain the final parking trajectory of the vehicle to be parked.

Optionally, parking control can be performed on the vehicle to be parked according to the final parking trajectory of the vehicle to be parked, so that the vehicle to be parked can follow the final parking trajectory of the vehicle to be parked and stop at an intended parking spot. Optionally, the final parking trajectory of the vehicle to be parked can be outputted to the central control display apparatus of the vehicle to be parked, so that the user can conduct autonomous parking control with reference to the final parking trajectory of the vehicle to be parked.

Based on the embodiment shown in FIG. 1, in the method for generating the parking trajectory provided by this embodiment, the parking trajectory sampling can be performed for the vehicle to be parked according to the lateral driving behavior control strategy and the longitudinal driving behavior control strategy to obtain multiple parking trajectories. The multiple parking trajectories obtained according to the lateral driving behavior control strategy and the longitudinal driving behavior control strategy can provide the user with multiple options for parking trajectories, thereby improving the user experience. The cost calculation is performed on the multiple parking trajectories according to the cost function, and the parking trajectory with the best cost is selected as the parking trajectory of the vehicle to be parked, which improves the accuracy of the method for generating the parking trajectory. In addition, the parking trajectory of the vehicle to be parked is optimized according to the lane information and the obstacle information to obtain the final parking trajectory of the vehicle to be parked, which further improves the accuracy of the method for generating the parking trajectory.

FIG. 9 is a schematic flowchart of performing lateral parking trajectory sampling for a vehicle to be parked according to a lateral driving behavior control strategy provided by a fourth embodiment of the present application. Based on the embodiment shown in FIG. 2 or FIG. 6, this embodiment describes in detail the process of performing lateral parking trajectory sampling for the vehicle to be parked according to the lateral driving behavior control strategy.

As shown in FIG. 9, the performing lateral parking trajectory sampling for the vehicle to be parked according to the lateral driving behavior control strategy in this embodiment may include the following steps.

Step S901: determining a type of the lateral driving behavior control strategy.

Specifically, as described in step S202, the lateral driving behavior control strategy includes but is not limited to: controlling the vehicle to keep driving in the current lane, controlling the vehicle to perform lane-borrowing driving, controlling the vehicle to perform lane-changing driving, controlling the vehicle to perform avoidance driving, and other strategies. In the process of performing lateral parking trajectory sampling for the vehicle to be parked according to the lateral driving behavior control strategy, the type of the lateral driving behavior control strategy can be determined first, so as to perform lateral parking trajectory sampling according to different types of lateral driving behavior control strategies.

Step S902: setting a drivable area and a sampling rule corresponding to the type of the lateral driving behavior control strategy.

Specifically, for different cases of the lateral driving behavior control strategies determined in step S901, the drivable areas and the sampling rules of performing lateral parking trajectory sampling for the vehicle to be parked are different. For example, the lateral range of the drivable area is small in the case that the lateral behavior control is to control the vehicle to keep driving in the current lane; the lateral range of the drivable area is increased in the case that the lateral behavior control is to control the vehicle to perform avoidance driving; the lateral range of the drivable area is further increased in the case that the lateral behavior control is to control the vehicle to perform lane-borrowing driving, or control the vehicle to perform lane-changing driving.

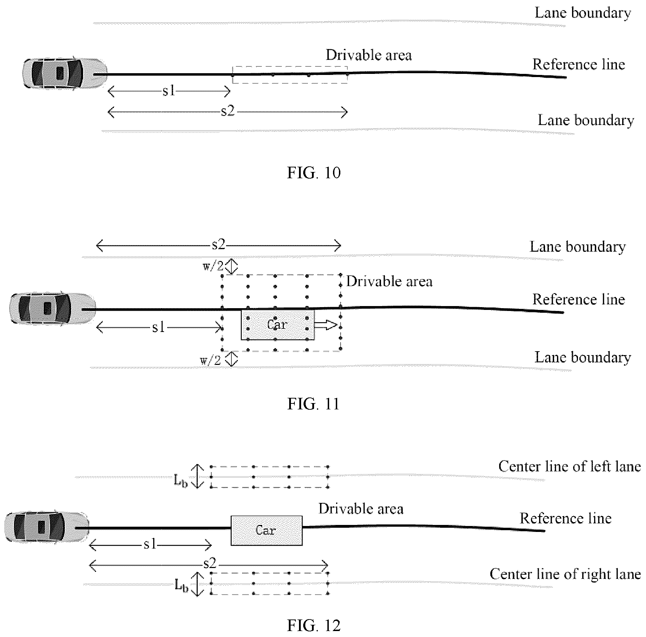

Optionally, if the type of the lateral driving behavior control strategy is to control the vehicle to keep driving in the current lane, the drivable area for controlling the vehicle to keep driving in the current lane can be set, as shown in FIG. 10, which is an example diagram showing a drivable area when a lateral driving behavior control strategy is to control a vehicle to keep driving in the current lane. The lateral range of the drivable area for controlling the vehicle to keep driving in the current lane is kept above the driving reference line, and the longitudinal range of the drivable area for controlling the vehicle to keep driving in the current lane is kept in the position range from $s_1$ to $s_2$, where $s_1$ is the position corresponding to the maximum deceleration at time T, and $s_2$ is the position corresponding to the maximum acceleration at time T. T indicates the maximum time of the time window for parking trajectory planning, for example, 8s. The time window is updated instantly. For example, at a certain moment, the time window for trajectory planning is set to 1s to 8s; after a certain time, for example, 1s, the time window for trajectory planning is reset to 1s to 8s, so as to achieve the purpose of completing the sampling for a certain lateral parking trajectory. Specifically, the expressions of $s_1$ and $s_2$ are as follows:

$$s1 = v_0 T + 0.5 * dec * T^2$$

$$s2 = v_0 T + 0.5 * acc * T^2$$

where $v_0$ represents the current speed of the vehicle to be parked, *dec* represents the maximum deceleration, *acc* represents the maximum acceleration, and *T* represents the maximum moment of the time window for parking trajectory planning.

The sampling rule for controlling the vehicle to keep driving in the current lane can be set. Specifically, as described above, the drivable area for controlling the vehicle to keep driving in the current lane allows the vehicle to be parked to drive along the driving reference line. Thus, there is only one option for the lateral position of the vehicle to be parked, that is, when the lateral behavior control behavior strategy is to control the vehicle to keep driving in the current lane, there is only one kind of lateral parking trajectory sampling. Therefore, the sampling rule of the lateral parking trajectory for controlling the vehicle to keep driving in the current lane is to perform longitudinal sampling with unequal intervals within the drivable area for controlling the vehicle to keep driving in the current lane, where the unequal sampling intervals can be set according to the user requirements. For example, a smaller sampling interval can be set when the user has a higher requirement for sampling accuracy, and a larger sampling interval can be set when the user has a lower requirement for sampling accuracy.

Optionally, if the type of the lateral driving behavior control strategy is to control the vehicle to perform avoidance driving, the drivable area for controlling the vehicle to perform avoidance driving can be set, as shown in FIG. 11, which is an example diagram showing a drivable area when a lateral driving behavior control strategy is to control a vehicle to perform avoidance driving. The lateral range of the drivable area for controlling the vehicle to perform avoidance driving is kept within the current lane, and the lateral boundary of the drivable area needs to be at a certain distance from the boundary of the current lane, for example, W/2, where W is the width of the vehicle to be parked. The longitudinal range of the drivable area for controlling the vehicle to perform avoidance driving is kept in the position range from $s_1$ to $s_2$, where the descriptions of $s_1$ and $s_2$ can be found in the above description. The sampling rule for controlling the vehicle to perform avoidance driving can be set. Specifically, as described above, the drivable area for controlling the vehicle to perform avoidance driving allows more than one options for the lateral position of the vehicle to be parked. Therefore, the sampling rule of the lateral parking trajectory for controlling the vehicle to perform avoidance driving is to perform lateral sampling with equal intervals and perform longitudinal sampling with unequal intervals within the drivable area for controlling the vehicle to perform avoidance driving. The equal sampling intervals can be set according to the user requirements, and the unequal sampling intervals can also be set according to the user requirements. For example, a smaller sampling interval can be set when the user has a higher requirement for sampling accuracy, and a larger sampling interval can be set when the user has a lower requirement for sampling accuracy. Optionally, when the controlling the vehicle to perform avoidance driving is completed, the lateral driving behavior control strategy of the vehicle to be parked is changed to be controlling the vehicle to keep driving in the current lane.

Optionally, if the type of the lateral driving behavior control strategy is to control the vehicle to perform lane-changing driving or to control the vehicle to perform lane-borrowing driving, a drivable area for controlling the vehicle to perform lane-changing driving or controlling the vehicle to perform lane-borrowing driving can be set, as shown in FIG. 12, which is an example diagram showing a drivable area when a lateral driving behavior control strategy is to change a lane or control a vehicle to perform lane-borrowing driving. The lateral range of the drivable area for controlling the vehicle to perform lane-changing driving or controlling the vehicle to perform lane-borrowing driving is kept near the center line of an adjacent lane. For example, the lateral range of the drivable area for controlling the vehicle to perform lane-changing driving is kept near the center line of an adjacent same-direction lane, and the lateral range of the drivable area for controlling the vehicle to perform lane-borrowing driving is kept near the center line of an adjacent opposite-direction lane. The number of drivable areas of the vehicle to be parked can be decided according to the two-point lane information collected in step S101. For example, if there is only one adjacent lane of the vehicle to be parked, there is at most one drivable area, and if there are two adjacent lanes of the vehicle to be parked, there can be two drivable areas, where the lateral boundary of each drivable area can be set according to the lane information and user requirements, for example, the lateral boundary of the drivable area is set as $L_b$. The longitudinal range of the drivable area for controlling the vehicle to perform lane-changing driving or controlling the vehicle to perform lane-borrowing driving is kept in the position range from $s_1$ to $s_2$, where the descriptions of $s_1$ and $s_2$ can be found in the above description. The sampling rule for changing a lane or controlling the vehicle to perform lane-borrowing driving can be set. Specifically, as described above, the drivable area for controlling the vehicle to perform lane-changing driving or controlling the vehicle to perform lane-borrowing driving allows more than one options for the lateral position of the vehicle to be parked. Therefore, the sampling rule of the lateral parking trajectory for controlling the vehicle to perform lane-changing driving or controlling the vehicle to perform lane-borrowing driving is to perform lateral sampling with equal intervals and perform longitudinal sampling with unequal intervals within the drivable area for controlling the vehicle to perform lane-changing driving or controlling the vehicle to perform lane-borrowing driving. The equal sampling intervals can be set according to the user requirements, and the unequal sampling intervals can also be set according to the user requirements. For example, a smaller sampling interval can be set when the user has a higher requirement for sampling accuracy, and a larger sampling interval can be set when the user has a lower requirement for sampling accuracy. Optionally, when the controlling the vehicle to perform lane-changing driving or controlling the vehicle to perform lane-borrowing driving is completed, the lateral driving behavior control strategy of the vehicle to be parked is changed to be controlling the vehicle to keep driving in the current lane. Optionally, when the controlling the vehicle to perform lane-changing driving or controlling the vehicle to perform lane-borrowing driving is completed, the lateral driving behavior control strategy of the vehicle to be parked is changed to be controlling the vehicle to keep driving in the current lane.

Step S903: performing lateral parking trajectory sampling for the vehicle to be parked according to the drivable area and the sampling rule.

Specifically, lateral parking trajectory sampling can be performed for the vehicle to be parked according to the drivable area and the sampling rule which corresponds to the type of the lateral driving behavior control strategy and are set in step S903.

Optionally, when the lateral driving behavior control strategy is to control the vehicle to perform avoidance driving, as shown in FIG. 11, the drivable area for controlling the vehicle to perform avoidance driving includes the position where the obstacle is located. Therefore, when performing parking trajectory sampling for the vehicle to be parked within the drivable area for controlling the vehicle to perform avoidance driving according to the sampling rule for controlling the vehicle to perform avoidance driving, the sampling point(s) at the position where the obstacle is located can be removed before performing lateral parking trajectory sampling.

In the process of performing lateral parking trajectory sampling for the vehicle to be parked according to the lateral behavior of the lateral driving behavior control strategy provided by this embodiment, the type of the lateral driving behavior control strategy is determined, the drivable area and the sampling rule corresponding to the type of the lateral driving behavior control strategy are set, and the lateral parking trajectory sampling is performed for the vehicle to be parked according to the drivable area and the sampling rule. By setting different sampling drivable areas and sampling rules for different lateral driving behavior control strategies, the accuracy of lateral parking trajectory sampling is improved, which further improves the accuracy of the method for generating the parking trajectory.

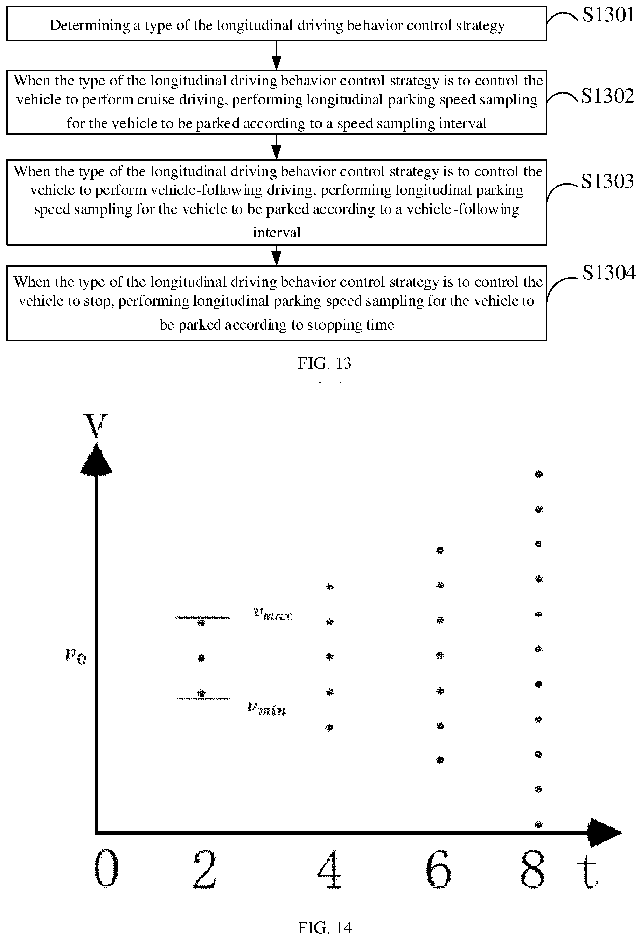

FIG. 13 is a schematic flowchart of performing longitudinal parking speed sampling for a vehicle to be parked according to a longitudinal driving behavior control strategy provided by a fifth embodiment of the present application. Based on the embodiment shown in FIG. 2 or FIG. 6, this embodiment describes in detail the process of performing longitudinal parking speed sampling for the vehicle to be parked according to the longitudinal driving behavior control strategy.

As shown in FIG. 13, the performing longitudinal parking speed sampling for the vehicle to be parked according to the longitudinal driving behavior control strategy in this embodiment may include the following steps.

Step S1301: determining a type of the longitudinal driving behavior control strategy.

Specifically, as described in step S504, the longitudinal driving behavior control strategy includes: controlling the vehicle to perform cruise driving, controlling the vehicle to perform vehicle-following driving, and controlling the vehicle to stop. In the process of performing longitudinal parking speed sampling for the vehicle to be parked according to the longitudinal driving behavior control strategy, the type of the longitudinal driving behavior control strategy can be determined first, so as to perform longitudinal parking speed sampling for different types of longitudinal driving behavior control strategies.

Step S1302: when the type of the longitudinal driving behavior control strategy is to control the vehicle to perform cruise driving, performing longitudinal parking speed sampling for the vehicle to be parked according to a speed sampling interval.

Specifically, for different cases of the types of longitudinal driving behavior control strategies determined in step S1301, the methods for longitudinal parking speed sampling of the vehicle to be parked are different.

Specifically, when the type of the longitudinal driving behavior control strategy is to control the vehicle to perform cruise driving, longitudinal parking speed sampling can be performed for the vehicle to be parked according to the speed sampling interval. As shown in FIG. 14, FIG. 14 is an example diagram of a speed sampling interval when a longitudinal driving behavior control strategy is to control a vehicle to perform cruise driving. Herein, $v_{min}$ represents the minimum speed that the current speed $v_0$ can reach after time $t$; $v_{max}$ represents the maximum speed that the current speed $v_0$ can reach after time $t$. The expressions of $v_{min}$ and $v_{max}$ are as follows:

$$v_{min} = v_0 + dec * t$$

$$v_{max} = v_0 + acc * t.$$

The speed sampling interval [$v_{min}$, $v_{max}$] of each moment $t$ within the time window of trajectory planning can be calculated, and uniform sampling can be carried out in the speed sampling interval. Specifically, the speed curve can be acquired by a polynomial interpolation method, such as quartic polynomial interpolation, according to the initial position, the initial speed, the initial acceleration and the final speed.

Step S1303: when the type of the longitudinal driving behavior control strategy is to control the vehicle to perform vehicle-following driving, performing longitudinal parking speed sampling for the vehicle to be parked according to a vehicle-following interval.

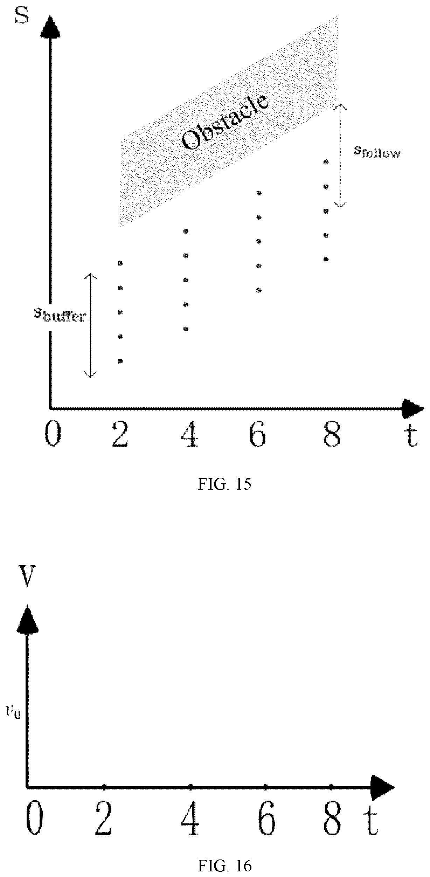

Specifically, when the type of the longitudinal driving behavior control strategy is to control the vehicle to perform vehicle-following driving, longitudinal parking speed sampling is performed for the vehicle to be parked according to the vehicle-following distance, as shown in FIG. 15, which is an example diagram of a speed sampling interval when a longitudinal driving behavior control strategy is to control a vehicle to perform vehicle-following driving. Herein, $s_{follow}$ represents an ideal vehicle-following distance and $s_{buffer}$ represents a vehicle-following interval. Specifically, the sampling can be performed within the vehicle-following interval. Specifically, the speed curve can be acquired by a polynomial interpolation method, such as quintic polynomial interpolation, according to the initial position, the initial speed, the initial acceleration, the final position and the final speed, where the final speed is set as the speed of the preceding vehicle.

Step S1304: when the type of the longitudinal driving behavior control strategy is to control the vehicle to stop, performing longitudinal parking speed sampling for the vehicle to be parked according to stopping time.

Specifically, when the type of the longitudinal driving behavior control strategy is to control the vehicle to stop, longitudinal parking speed sampling can be performed for the vehicle to be parked according to the stopping time, as shown in FIG. 16, which is an example diagram of a speed sampling interval when a longitudinal driving behavior control strategy is to control a vehicle to stop. The stopping time t can be sampled. Specifically, the speed curve can be acquired by a polynomial interpolation method, such as quartic polynomial interpolation, according to the initial position, the initial speed, the initial acceleration and the final speed, where the final speed is 0.

In the process of performing longitudinal parking speed sampling for the vehicle to be parked according to the longitudinal driving behavior control strategy provided by this embodiment, the type of the longitudinal driving behavior control strategy is determined; when the type of the longitudinal driving behavior control strategy is to control the vehicle to perform cruise driving, longitudinal parking speed sampling is performed for the vehicle to be parked according to the speed sampling interval, and when the type of the longitudinal driving behavior control strategy is to control the vehicle to perform vehicle-following driving, longitudinal parking speed sampling is performed for the vehicle to be parked according to the vehicle-following interval. By setting different sampling methods for different longitudinal driving behavior control strategies, the accuracy of longitudinal parking speed sampling is improved, which further improves the accuracy of the method for generating the parking trajectory.

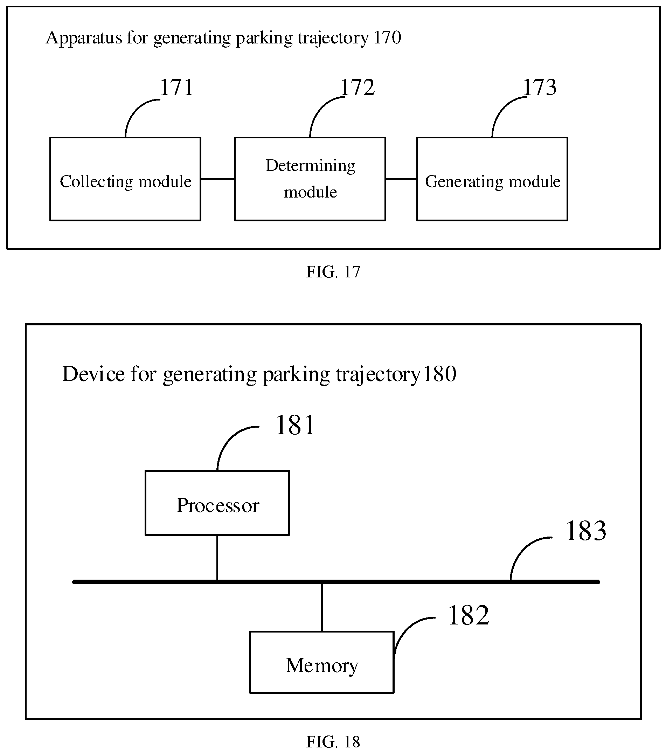

FIG. 17 is a schematic structural diagram of an apparatus for generating a parking trajectory provided by a sixth embodiment of the present application.

As shown in FIG. 17, the apparatus 170 for generating the parking trajectory in this embodiment includes a collecting module 171, a determining module 172 and a generating module 173.

The collecting module 171 is configured to collect lane information ahead of a vehicle to be parked, and a position and a motion state of an obstacle around the vehicle to be parked.

The determining module 172 is configured to determine positional relationships between the obstacle and the vehicle and between the obstacle and a lane where the vehicle is located.

The determining module 172 is further configured to determine an obstacle strategy according to the positional relationships, the lane information and the motion state of the obstacle.

The generating module 173 is configured to generate a lateral driving behavior control strategy according to a motion state of the vehicle, the obstacle strategy and the lane information, and generate a longitudinal driving behavior control strategy according to the lane information, the position of the obstacle and the motion state of obstacle.

The generating module 173 is further configured to generate a parking trajectory of the vehicle to be parked according to the lateral driving behavior control strategy and the longitudinal driving behavior control strategy.

The apparatus provided by this embodiment can be configured to perform the technical solutions of the above method embodiments as shown in FIG. 1 to FIG. 16. The implementation principles and technical effects thereof are similar, and will not be repeated in this embodiment here.

FIG. 18 is a schematic structural diagram of a device for generating a parking trajectory provided by a seventh embodiment of the present application.

As shown in FIG. 18, the device 180 for generating the parking trajectory in this embodiment includes a processor 181, a memory 182 and a communication interface 183.

The memory 182 is configured to store executable instructions of the processor.

The processor 181 is configured to execute the method for generating the parking trajectory of any one of the above-mentioned method embodiments of FIG. 1 to FIG. 16 by executing the executable instructions.

An embodiment of the present application also provides a readable storage medium, on which a computer program is stored, where the computer program, when executed by a processor, implements the method for generating the parking trajectory of any one of the above-mentioned method embodiments of FIG. 1 to FIG. 16.

Those skilled in the art can understand that all or part of the steps in the above methods can be implemented by a program instructing related hardware (such as a processor), and the program can be stored in a computer-readable storage medium, such as a read-only memory, a magnetic disk or an optical disk. Optionally, all or part of the steps of the above embodiments can also be implemented by using one or more integrated circuits. Accordingly, each module/unit in the above embodiments can be implemented in the form of hardware, for example, to implement the corresponding function by an integrated circuit, or in the form of a software function module, for example, to implement the corresponding function by a processor executing a program or instructions stored in a memory. The present invention is not limited to any specific combination of hardware and software.

It should be noted that user information (including but not limited to user equipment information, user personal information, etc.) and data (including but not limited to data for analysis, stored data, displayed data, etc.) involved in the present application are all information and data authorized by users or fully authorized by each party, and the collection, use and processing of relevant data need to comply with relevant laws, regulations and standards of relevant countries and regions. In addition, a corresponding operation entry is provided for users to select authorization or rejection.

Those skilled in the art will easily think of other embodiments of the present application after considering the description and practicing the invention disclosed herein. The present application is intended to cover any variations, uses or adaptations of the present application, which follow the general principles of the present application and include common knowledge or common technical means in the art that are not disclosed in the present application. The description and embodiments are to be regarded as exemplary only, with the true scope and spirit of the present application being indicated by the following claims.

It should be understood that the present application is not limited to the precise structures described above and shown in the accompanying drawings, and various modifications and changes can be made without departing from its scope. The scope of the present application is limited only by the appended claims.

## Claims

1. A method for generating a parking trajectory, comprising:

   collecting lane information ahead of a vehicle to be parked, and a position and a motion state of an obstacle around the vehicle to be parked;
   determining positional relationships between the obstacle and the vehicle and between the obstacle and a lane where the vehicle is located;
   determining an obstacle strategy according to the positional relationships, the lane information and the motion state of the obstacle;
   generating a lateral driving behavior control strategy according to a motion state of the vehicle, the obstacle strategy and the lane information, and generating a longitudinal driving behavior control strategy according to the lane information, the position of the obstacle and the motion state of the obstacle;
   generating a parking trajectory of the vehicle to be parked according to the lateral driving behavior control strategy and the longitudinal driving behavior control strategy.

2. The method according to claim 1, wherein determining the obstacle strategy according to the positional relationships, the lane information and the motion state of the obstacle comprises:

   if the obstacle is located behind the vehicle, or if the obstacle is located ahead of the vehicle and the obstacle is in a moving state, the obstacle strategy being controlling the vehicle to ignore the obstacle and drive;
   if the obstacle is located ahead of the vehicle and the obstacle is in a static state, the obstacle strategy being controlling the vehicle to circumvent the obstacle and drive;
   if a range occupied by the obstacle in a current lane where the vehicle is located is less than a set area, the obstacle strategy being controlling the vehicle to avoid the obstacle and drive.

3. The method according to claim 2, wherein generating the lateral driving behavior control strategy according to the motion state of the vehicle, the obstacle strategy and the lane information comprises:

   determining that the motion state of the vehicle comprises a lateral movement;
   if the obstacle strategy is to control the vehicle to circumvent the obstacle and drive, deciding, according to the lane information, whether the vehicle needs to control the vehicle to perform lane-borrowing driving, if needed, controlling the vehicle to perform lane-borrowing driving, otherwise, the lateral driving behavior control strategy being controlling the vehicle to perform lane-changing driving;
   if the obstacle strategy is to control the vehicle to avoid the obstacle and drive, the lateral driving behavior control strategy being controlling the vehicle to perform avoidance driving.

4. The method according to claim 3, further comprising:

determining that the motion state of the vehicle does not comprise a lateral movement;
the lateral driving behavior control strategy being controlling the vehicle to keep driving in the current lane.

5. The method according to claim 4, wherein generating the longitudinal driving behavior control strategy according to the lane information, the position of the obstacle and the motion state of the obstacle comprises:

generating a driving reference line according to the lane information;
projecting the obstacle onto the driving reference line, and determining a positional relationship between the obstacle and the driving reference line;
if the obstacle is not located on the driving reference line, the longitudinal driving behavior control strategy being controlling the vehicle to perform cruise driving;
if the obstacle is located on the driving reference line, deciding whether the obstacle is in the moving state, if so, the longitudinal driving behavior control strategy being controlling the vehicle to perform vehicle-following driving, otherwise, the longitudinal driving behavior control strategy being controlling the vehicle to stop.

6. The method according to claim 5, wherein generating the parking trajectory of the vehicle to be parked according to the lateral driving behavior control strategy and the longitudinal driving behavior control strategy comprises:

performing parking trajectory sampling for the vehicle to be parked according to the lateral driving behavior control strategy and the longitudinal driving behavior control strategy to obtain multiple parking trajectories;
performing cost calculation on the multiple parking trajectories according to a cost function, and selecting a parking trajectory with a best cost as the parking trajectory of the vehicle to be parked.

7. The method according to claim 6, further comprising:
optimizing the parking trajectory of the vehicle to be parked according to the lane information and obstacle information to obtain a final parking trajectory of the vehicle to be parked.

8. The method according to claim 6, wherein performing parking trajectory sampling for the vehicle to be parked according to the lateral driving behavior control strategy and the longitudinal driving behavior control strategy to obtain the multiple parking trajectories comprises:

performing lateral parking trajectory sampling for the vehicle to be parked according to the lateral driving behavior control strategy to obtain multiple lateral parking trajectories;
performing longitudinal parking speed sampling for the vehicle to be parked according to the longitudinal driving behavior control strategy to obtain multiple longitudinal parking speed curves;
combining the multiple lateral parking trajectories with the multiple longitudinal parking speed curves to obtain the multiple parking trajectories.

9. The method according to claim 6, wherein performing cost calculation on the multiple the parking trajectories according to the cost function, and selecting the parking trajectory with the best cost as the trajectory of the vehicle to be parked comprises:

calculating a cost value of each motion parameter of each of the parking trajectories according to the cost function;
performing weighted calculation on the cost value of each motion parameter of each of the parking trajectories to obtain a weighted cost value corresponding to each of the parking trajectories;
selecting a parking trajectory corresponding to a minimum weighted cost value as the parking trajectory of the vehicle to be parked.

10. The method according to claim 7, wherein optimizing the parking trajectory of the vehicle to be parked according to the lane information and the obstacle information to obtain the final parking trajectory of the vehicle to be parked comprises:

decomposing the parking trajectory of the vehicle to be parked into a lateral parking trajectory of the vehicle to be parked and a longitudinal parking speed curve of the vehicle to be parked;
extracting a lateral variable to be optimized from the lateral parking trajectory of the vehicle to be parked, and setting a lateral optimization objective function and a lateral optimization condition according to the obstacle information and the lane information;
optimizing the lateral variable to be optimized according to the lateral optimization objective function and the lateral optimization condition to obtain a final lateral parking trajectory of the vehicle to be parked;

selecting a longitudinal variable to be optimized from the longitudinal parking speed curve of the vehicle to be parked, and setting a longitudinal optimization objective function and a longitudinal optimization condition according to the obstacle information;

optimizing the longitudinal variable to be optimized according to the longitudinal optimization objective function and the longitudinal optimization condition to obtain a final longitudinal parking speed curve of the vehicle to be parked;

combining the final lateral parking trajectory of the vehicle to be parked with the final longitudinal parking speed curve of the vehicle to be parked to obtain the final parking trajectory of the vehicle to be parked.

11. The method according to claim 8, wherein performing lateral parking trajectory sampling for the vehicle to be parked according to the lateral driving behavior control strategy comprises:

determining a type of the lateral driving behavior control strategy;

setting a drivable area and a sampling rule corresponding to the type of the lateral driving behavior control strategy;

performing lateral parking trajectory sampling for the vehicle to be parked according to the drivable area and the sampling rule.

12. The method according to claim 8, wherein performing longitudinal parking speed sampling for the vehicle to be parked according to the longitudinal driving behavior control strategy comprises:

determining a type of the longitudinal driving behavior control strategy;

when the type of the longitudinal driving behavior control strategy is to control the vehicle to perform cruise driving, performing longitudinal parking speed sampling for the vehicle to be parked according to a speed sampling interval;

when the type of the longitudinal driving behavior control strategy is to control the vehicle to perform vehicle-following driving, performing longitudinal parking speed sampling for the vehicle to be parked according to a vehicle-following interval;

when the type of the longitudinal driving behavior control strategy is to control the vehicle to stop, performing longitudinal parking speed sampling for the vehicle to be parked according to stopping time.

13. An apparatus for generating a parking trajectory, comprising:

a collecting module, configured to collect lane information ahead of a vehicle to be parked, and a position and a motion state of an obstacle around the vehicle to be parked;

a determining module, configured to determine positional relationships between the obstacle and the vehicle and between the obstacle and a lane where the vehicle is located;

the determining module, further configured to determine an obstacle strategy according to the positional relationships, the lane information and the motion state of the obstacle;

a generating module, configured to generate a lateral driving behavior control strategy according to a motion state of the vehicle, the obstacle strategy and the lane information, and generate a longitudinal driving behavior control strategy according to the lane information, the position of the obstacle and the motion state of the obstacle;

the generating module, further configured to generate a parking trajectory of the vehicle to be parked according to the lateral driving behavior control strategy and the longitudinal driving behavior control strategy.

14. A device for generating a parking trajectory, comprising:

a processor, a memory and a communication interface;

wherein the memory is configured to store executable instructions of the processor;

wherein the processor is configured to perform the method for generating the parking trajectory according to any one of claims 1 to 12 by executing the executable instructions.

Collecting lane information ahead of a vehicle to be parked, and a position and a motion state of an obstacle around the vehicle to be parked — S101

Determining positional relationships between the obstacle and the vehicle and between the obstacle and a lane where the vehicle is located — S102

Determining an obstacle strategy according to the positional relationships, the lane information and the motion state of the obstacle; generating a lateral driving behavior control strategy according to a motion state of the vehicle, the obstacle strategy and the lane information, and generating a longitudinal driving behavior control strategy according to the lane information, the position of the obstacle and the motion state of the obstacle — S103

Generating a parking trajectory of the vehicle to be parked according to the lateral driving behavior control strategy and the longitudinal driving behavior control strategy — S104

FIG. 1

Determining the obstacle strategy according to the positional relationships, the lane information and the motion state of the obstacle

S201

Generating the lateral driving behavior control strategy according to the motion state of the vehicle, the obstacle strategy and the lane information

S202

Generating the longitudinal driving behavior control strategy according to the lane information, the position of the obstacle and the motion state of the obstacle

S203

FIG. 2

Start

Rear obstacle — No → Front moving obstacle — No → Front static obstacle — No → Obstacle intruding into small range of lane

Yes

Yes

Yes

Obstacle strategy

Ignoring control ← Yes

Circumvention control

Avoidance control

End

FIG. 3

Start

Obstacle strategy

Whether lateral movement is required — Yes → Avoidance control — No → Circumvention control

Yes

Whether lane-borrowing is required

No | Yes

Lateral driving behavior control strategy

No → Lane keeping

Yes → Avoidance control

Lane-changing control

Lane-borrowing control

Start of lateral movement

In lateral movement

Whether to abort abnormally — Yes → Cancellation of lateral movement

No → End of lateral movement

End

FIG. 4

Start

Whether there is obstacle on driving reference line — No → Whether obstacle is moving — No

Yes | Yes

Longitudinal driving behavior control strategy

Cruise control

Vehicle-following control

Vehicle-stopping control

End

FIG. 5

Performing parking trajectory sampling for the vehicle to be parked according to the lateral driving behavior control strategy and the longitudinal driving behavior control strategy to obtain multiple parking trajectories ⌐S601

Performing cost calculation on the multiple parking trajectories according to a cost function, and selecting a parking trajectory with the best cost as the parking trajectory of the vehicle to be parked ⌐S602

Optimizing the parking trajectory of the vehicle to be parked according to the lane information and obstacle information to obtain a final parking trajectory of the vehicle to be parked ⌐S603

FIG. 6

Start

Lane-keeping control — No → Avoidance control — No → Lane-changing or lane-borrowing control

Yes | Yes | Yes

Drivable area for lane-keeping control | Drivable area for avoidance control | Drivable area for lane-changing or lane-borrowing control

Performing lateral parking trajectory sampling in drivable area

End

FIG. 7

Start

Cruise control —No→ Vehicle-following control —No→ Vehicle-stopping control

Yes ↓ | Yes ↓ | Yes ↓

| Performing longitudinal parking speed sampling according to speed sampling interval | Performing longitudinal parking speed sampling according to vehicle-following interval | Performing longitudinal parking speed sampling according to stopping time |

End

FIG. 8

Determining a type of the lateral behavior control strategy — S901

Setting a drivable area and a sampling rule corresponding to the type of the lateral driving behavior control strategy — S902

Performing lateral parking trajectory sampling for the vehicle to be parked according to the drivable area and the sampling rule — S903

FIG. 9

Lane boundary

Drivable area

Reference line

Lane boundary

$\langle$————s1————$\rangle$

$\langle$——————s2——————$\rangle$

FIG. 10

$\langle$——————s2——————$\rangle$

Lane boundary

w/2

Drivable area

Reference line

$\langle$——s1——$\rangle$

Car

Lane boundary

w/2

FIG. 11

Center line of left lane

$L_b$

Drivable area

Reference line

$\langle$——s1——$\rangle$

Car

$\langle$——————s2——————$\rangle$

Center line of right lane

$L_b$

FIG. 12

| Determining a type of the longitudinal driving behavior control strategy | S1301 |

↓

| When the type of the longitudinal driving behavior control strategy is to control the vehicle to perform cruise driving, performing longitudinal parking speed sampling for the vehicle to be parked according to a speed sampling interval | S1302 |

↓

| When the type of the longitudinal driving behavior control strategy is to control the vehicle to perform vehicle-following driving, performing longitudinal parking speed sampling for the vehicle to be parked according to a vehicle-following interval | S1303 |

↓

| When the type of the longitudinal driving behavior control strategy is to control the vehicle to stop, performing longitudinal parking speed sampling for the vehicle to be parked according to stopping time | S1304 |

FIG. 13

FIG. 14

FIG. 15

FIG. 16

Apparatus for generating parking trajectory 170

171

172

173

Collecting module

Determining module

Generating module

FIG. 17

Device for generating parking trajectory 180

181

Processor

183

182

Memory

FIG. 18

## INTERNATIONAL SEARCH REPORT

| International application No. |
| --- |
| **PCT/CN2024/109001** |

**A.    CLASSIFICATION OF SUBJECT MATTER**

B60W30/06(2006.01)i;  B60W30/095(2012.01)i;  G05D1/00(2024.01)i

According to International Patent Classification (IPC) or to both national classification and IPC

**B.    FIELDS SEARCHED**

Minimum documentation searched (classification system followed by classification symbols)

    IPC:  B60W30/-; G05D1/-

Documentation searched other than minimum documentation to the extent that such documents are included in the fields searched

Electronic data base consulted during the international search (name of data base and, where practicable, search terms used)

    VCN, CNKI, 读秀, DUXIU: 吉利, 王舜垚, 胡伟龙, 漆豪, 王朋, 泊车, 驻车, 停车, 轨迹, 路径, 路线, 障碍, 对象, 位置, 静止, 运动, 状态, 横向, 纵向, 最优, 优化; VEN, ENTXT, IEEE: GEELY, park, halt, trajectory, path, obstruction, obstacle, target, object, position, still, dynamic, status, lateral, vertical, optimize.

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117022250 A (ZHEJIANG GEELY HOLDING GROUP CO., LTD. et al.) 10 November 2023 (2023-11-10)<br>description, paragraphs 47-159, and figures 1-18 | 1-14 |
| Y | CN 116176566 A (JIANGLING MOTORS CO., LTD.) 30 May 2023 (2023-05-30)<br>description, paragraphs 101-250, and figures 1-12 | 1-14 |
| Y | CN 114987554 A (CHONGQING CHANG'AN AUTOMOBILE CO., LTD.) 02 September 2022 (2022-09-02)<br>description, paragraphs 59-136, and figures 1-7 | 1-14 |
| Y | CN 113276848 A (JIANGSU UNIVERSITY) 20 August 2021 (2021-08-20)<br>description, paragraphs 139-311, and figures 1-5 | 7, 9-10 |
| A | CN 109656244 A (LG ELECTRONICS, INC.) 19 April 2019 (2019-04-19)<br>entire document | 1-14 |
| A | CN 115884908 A (NIPPON SOKEN, INC. et al.) 31 March 2023 (2023-03-31)<br>entire document | 1-14 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 September 2024** | **25 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/109001** |

### C.  DOCUMENTS CONSIDERED TO BE RELEVANT

| Category* | Citation of document, with indication, where appropriate, of the relevant passages | Relevant to claim No. |
| --- | --- | --- |
| A | DE 102014202243 A1 (ROBERT BOSCH GMBH) 13 August 2015 (2015-08-13)<br>entire document | 1-14 |
| A | US 2020198623 A1 (VOLKSWAGEN AG) 25 June 2020 (2020-06-25)<br>entire document | 1-14 |
| A | US 2023101237 A1 (AISIN CORP. et al.) 30 March 2023 (2023-03-30)<br>entire document | 1-14 |
| A | WO 2022049812 A1 (MITSUBISHI ELECTRIC CORP.) 10 March 2022 (2022-03-10)<br>entire document | 1-14 |

Form PCT/ISA/210 (second sheet) (July 2022)

**INTERNATIONAL SEARCH REPORT**
**Information on patent family members**

International application No.

**PCT/CN2024/109001**

| Patent document cited in search report | | | Publication date (day/month/year) | Patent family member(s) | | | Publication date (day/month/year) |
|---|---|---|---|---|---|---|---|
| CN | 117022250 | A | 10 November 2023 | None | | | |
| CN | 116176566 | A | 30 May 2023 | None | | | |
| CN | 114987554 | A | 02 September 2022 | CN | 114987554 | B | 09 August 2024 |
| CN | 113276848 | A | 20 August 2021 | CN | 113276848 | B | 13 September 2022 |
| CN | 109656244 | A | 19 April 2019 | KR | 20190041253 | A | 22 April 2019 |
| | | | | KR | 102102651 | B1 | 29 May 2020 |
| | | | | US | 2019111916 | A1 | 18 April 2019 |
| | | | | US | 10906532 | B2 | 02 February 2021 |
| | | | | EP | 3470302 | A1 | 17 April 2019 |
| | | | | CN | 109656244 | B | 26 March 2024 |
| CN | 115884908 | A | 31 March 2023 | JPWO | 2022025087 | A1 | 03 February 2022 |
| | | | | JP | 7435787 | B2 | 21 February 2024 |
| | | | | WO | 2022025087 | A1 | 03 February 2022 |
| | | | | US | 2023174106 | A1 | 08 June 2023 |
| DE | 102014202243 | A1 | 13 August 2015 | None | | | |
| US | 2020198623 | A1 | 25 June 2020 | DE | 102018222531 | A1 | 25 June 2020 |
| | | | | US | 11325587 | B2 | 10 May 2022 |
| | | | | EP | 3670301 | A1 | 24 June 2020 |
| | | | | EP | 3670301 | B1 | 17 April 2024 |
| | | | | CN | 111422185 | A | 17 July 2020 |
| | | | | CN | 111422185 | B | 31 October 2023 |
| US | 2023101237 | A1 | 30 March 2023 | JP | 2023049882 | A | 10 April 2023 |
| | | | | JP | 7518805 | B2 | 18 July 2024 |
| | | | | CN | 115871688 | A | 31 March 2023 |
| WO | 2022049812 | A1 | 10 March 2022 | EP | 4208691 | A1 | 12 July 2023 |
| | | | | US | 2022073101 | A1 | 10 March 2022 |
| | | | | US | 11767035 | B2 | 26 September 2023 |
| | | | | JP | 2023531831 | A | 25 July 2023 |
| | | | | JP | 7450814 | B2 | 15 March 2024 |

# EP 4 755 741 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023109761670